**Europäisches Patentamt**

**European Patent Office**

**Office européen des brevets**

(19)

(11) Veröffentlichungsnummer : **0 142 163**
**B1**

(12)

# EUROPÄISCHE PATENTSCHRIFT

(45) Veröffentlichungstag der Patentschrift :
27.07.88

(21) Anmeldenummer : 84113687.2

(22) Anmeldetag : 13.11.84

(51) Int. Cl.⁴ : **F 16 H 9/24, F 16 G 5/18**

(54) Gliederkette für ein stufenlos verstellbares Kegelscheiben-Umschlingungsgetriebe.

(30) Priorität : 15.11.83 CH 6163/83

(43) Veröffentlichungstag der Anmeldung :
22.05.85 Patentblatt 85/21

(45) Bekanntmachung des Hinweises auf die Patenterteilung : 27.07.88 Patentblatt 88/30

(84) Benannte Vertragsstaaten :
AT BE DE FR GB IT LU NL SE

(56) Entgegenhaltungen :
DE-B- 1 119 065
GB-A- 2 537
GB-A- 291 188
US-A- 2 279 134
US-A- 2 475 264
CHEMICAL ABSTRACTS, Band 8, Nr. 61, (M-284) (1498) März 23, 1984

(73) Patentinhaber : Reber, Reinhold Friedrich
1120 East Short Drive
Ithaca, N.Y. 14850 (US)

(72) Erfinder : Reber, Reinhold Friedrich
1120 East Short Drive
Ithaca, N.Y. 14850 (US)

(74) Vertreter : Blum, Rudolf Emil Ernst et al
c/o E. Blum & Co Patentanwälte Vorderberg 11
CH-8044 Zürich (CH)

## Beschreibung

Die Erfindung betrifft eine Gliederkette nach dem Oberbegriff des Patentanspruchs 1.

Eine solche Gliederkette ist bereits durch die DE-PS 1 119 065, Fig. 2 bekannt. Zur Uebertragung der Reibkräfte von den Kegelscheiben auf die Gliederkette und umgekehrt sind gesonderte Druckstücke vorhanden. Es wird bezweckt, eine solche Gliederkette dahingehend auszugestalten, dass mit ihr ein möglichst geräuschloser Lauf erzielt werden kann. Es ist weiterhin durch die US-PS 2 475 264 eine Gliederkette bekannt, die von der Konstruktion her nicht für ein stufenlos verstellbares Kegelscheiben-Umschlingungsgetriebe geeignet ist, da auf die Druckflächen nur ein begrenzter Anpressdruck ausgeübt werden kann. Bei dieser bekannten Gliederkette, die als Rollenkette ausgebildet ist, befinden sich die Druckflächen an quer zur Kette liegenden Stegen, die frei von der Rollenkette abragen, so dass bei grossem Kraftangriff auf die Druckflächen die Stege an die Rollenkette angedrückt werden würden. Bei dieser bekannten Gliederkette würde also der Kraftfluss von den Druckflächen her nicht direkt über die Kettenglieder verlaufen, sondern über die abgewinkelten Druckflächen der Stege.

Es wird die Schaffung einer Gliederkette bezweckt, bei der auf die Druckflächen eine sehr grosse Kraft ausgeübt werden kann, ohne Gefahr einer Beschädigung der Gliederkette.

Die erfindungsgemässe Ausbildung der Gliederkette ergibt sich aus dem kennzeichnenden Teil des Patentanspruchs 1.

Durch verschiedene Erstreckung der Vorsprünge (Höhe, Dicke des Vorsprungs) werden Kettengliedscheiben unterschiedlicher Dicke (Breite) erreicht. Diese verschieden dicken Kettengliedscheiben können nunmehr in verschiedener Anordnung zueinander zu einem Kettenglied auf den zugeordneten Gelenkbolzen zusammengestellt werden. Das benachbarte Kettenglied kann eine davon abweichende Zusammensetzung seiner Kettengliedscheiben aufweisen. Man hat sozusagen zwei Freiheitsgrade in der Ausbildung einer Gliederkette, nämlich die erste Freiheit in der jeweiligen Zusammensetzung eines Kettengliedes aus verschiedenen Kettengliedscheiben, und die zweite Freiheit in der beliebigen Aneinanderreihung von verschiedenartig aufgebauten Kettenglieder zur ganzen Gliederkette.

In der Zeichnung sind drei Ausführungsbeispiele der erfindungsgemässen Gliederkette dargestellt. Es zeigen :

Fig. 1 eine Draufsicht auf drei Kettenglieder einer Gliederkette,

Fig. 2 eine Stirnansicht auf die Kettenglieder in Richtung eines Pfeiles A in Fig. 1,

Fig. 3 eine Stirnansicht nur auf das in Fig. 1 mittlere Kettenglied,

Fig. 4 eine Seitenansicht auf die drei Kettenglieder nach Fig. 1,

Fig. 5 eine zweite Ausführungsform der Gliederkette, von der zwei verschiedene Kettenglieder gezeigt sind, und

Fig. 6 eine dritte Ausführungsform der Gliederkette, von der nur ein Kettenglied gezeigt ist.

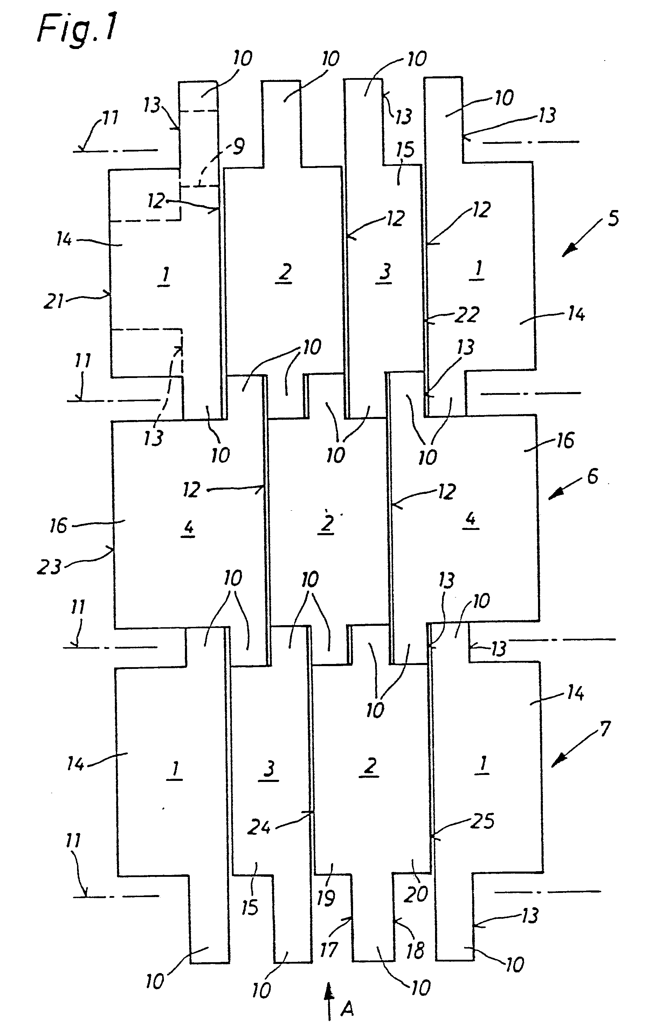

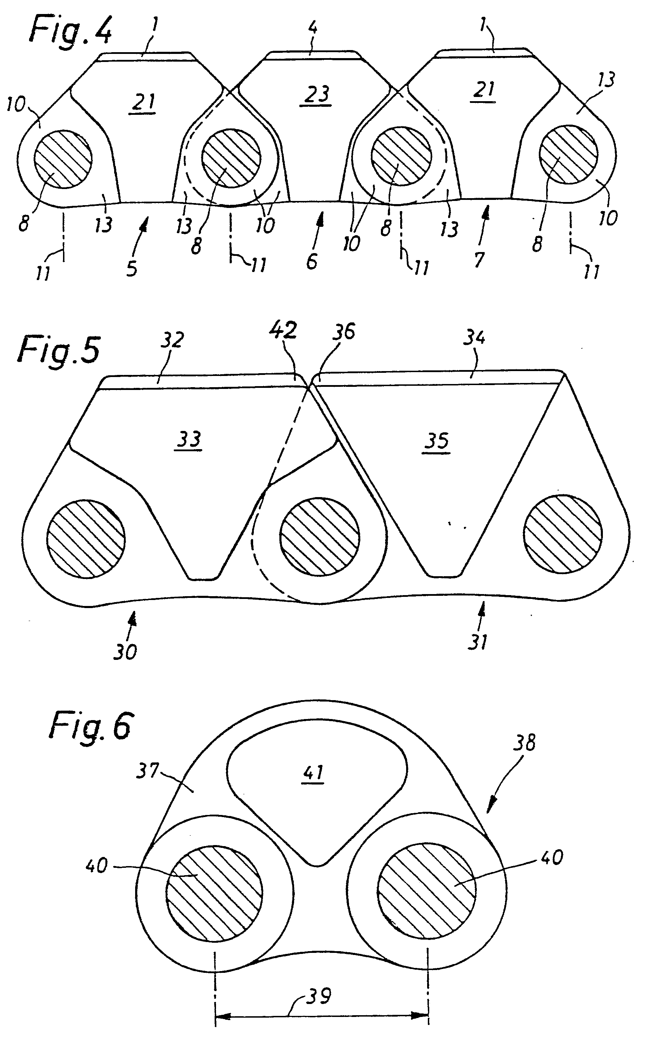

Bei der Gliederkette nach den Figuren 1-4 sind vier verschiedene Kettengliedscheiben 1-4 vorhanden. Der in den Fig. 1 und 4 gezeigte Gliederkettenabschnitt hat drei Kettenglieder 5, 6 und 7. Das Kettenglied 5 ist aus vier Kettengliedscheiben 1, 2 und 3 zusammengesetzt, wobei die Kettengliedscheibe 1 doppelt vorliegt. Das Kettenglied 6 ist aus nur drei Kettengliedscheiben 2 und 4 zusammengesetzt, wobei die Kettengliedscheibe 4 doppelt vorliegt. Das Kettenglied 7 ist wiederum aus vier Kettengliedscheiben 1, 2 und 3 zusammengesetzt, wobei wiederum die Kettengliedscheibe 1 doppelt vorliegt. Der Unterschied zwischen den Kettengliedern 5 und 7 liegt also lediglich in der anderen Aggregation ihrer Kettengliedscheiben.

Die Kettenglieder 5, 6 und 7 sind mittels Gelenkbolzen 8 miteinander gelenkig verbunden. Die Gelenkbolzen 8 sitzen in Durchbrechungen 9 von Scheibenlaschen 10 der Kettengliedscheiben 1, 2, 3 und 4. In Fig. 1 ist nur eine der Durchbrechungen 9 in den Laschen 10 und keiner der in den Durchbrechungen sitzenden Gelenkbolzen 8 dargestellt. Es sind lediglich die Mittellinien (Achsen) 11 der Durchbrechungen 9 und Gelenkbolzen 8 gezeigt, welche Mittellinien die Teilung der Gliederkette ausmachen.

Die Kettengliedscheiben einer Gliederkette können in erste Kettengliedscheiben 1, 3, 4 und in zweite Kettengliedscheiben 2 zusammengefasst werden, wobei die ersten Kettengliedscheiben 1, 3 und 4 eine ebene Rückenfläche 12 aufweisen, die sich über die gesamte Kettengliedscheibe erstreckt. Die ersten Kettengliedscheiben 1, 3 und 4 haben weiterhin eine ebene Vorderfläche 13, die sich nur über den Bereich der Scheibenlaschen 10 erstreckt, wobei die Vorderfläche 13 von einem ambossartigen Vorsprung 14, 15 und 16 überragt ist. Die Vorsprünge 14, 15 und 16 unterscheiden sich voneinander durch ihre Erstreckung, d. h. um das Mass, um das sie die Vorderfläche 13 überragen. Die Kettengliedscheibe 3 hat also den kürzesten Vorsprung 15, und die Kettengliedscheibe 4 hat den längsten Vorsprung 16.

Die zweiten Kettengliedscheiben 2 haben zwei zueinander parallele Laschenflächen 17 und 18, wobei jede Laschenfläche 17 und 18 von einem ambossartigen Vorsprung 19 und 20 überragt ist.

Jede der Kettengliedscheiben 1-4 hat also zwei Scheibenlaschen 10, wobei jede Scheibenlasche 10 zwei zueinander parallele Flächen 12, 13 bzw. 17, 18 aufweist. Durch diese zueinander parallelen Flächen 12 und 13 bzw. 17 und 18 kann man bei jeder Kettengliedscheibe eine Scheibenlaschenebene definieren, aus der ein bzw. zwei ambossartige Vorsprünge 14, 15, 16 bzw. 19, 20 ragen.

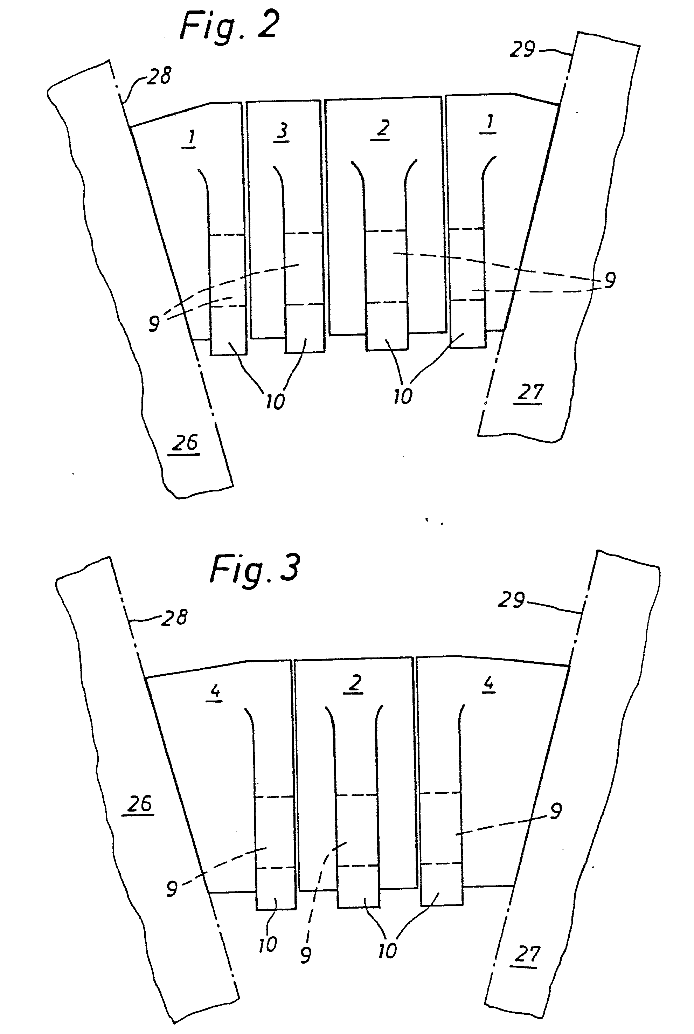

Jeder der Vorsprünge 14, 15, 16, 19 und 20 bildet mit seiner freien Stirnfläche eine für die Uebertragung der Reibkräfte dienende Druckfläche 21, 22, 23, 24 und 25. Jede Kettengliedscheibe 1 hat also einen Vorsprung 14, der die Druckfläche 21 aufweist. Jede Kettengliedscheibe 2 hat zwei Vorsprünge 19 und 20, wobei der Vorsprung 19 die Druckfläche 24 und der Vorsprung 20 die Druckfläche 25 aufweist. Jede Kettengliedscheibe 3 hat einen Vorsprung 15, der die Druckfläche 22 aufweist, und jede Kettengliedscheibe 4 hat einen Vorsprung 16, der eine Druckfläche 23 aufweist. Bei jeder Kettengliedscheibe 2 verlaufen die Druckflächen 24 und 25 parallel zueinander und auch parallel zu ihren Laschenflächen 17 und 18. Bei jeder Kettengliedscheibe 3 ist es ebenso, d. h. die Druckfläche 22 verläuft parallel zur Rückenfläche 12 und zur Vorderfläche 13. Bei den Kettengliedscheiben 1 und 4 ist das anders, da diese ja dazu bestimmt sind, mit ihren Druckflächen 21 und 23 an Kegelscheiben (Treibscheiben) 26 und 27 eines stufenlos verstellbaren Umschlingungsgetriebes anzuliegen, wie in den Fig. 2 und 3 angedeutet ist. Die Kettengliedscheiben 1 und 4 liegen bei der Gliederkette also zuäusserst und kommen deshalb zur Anlage mit den Kegelscheiben 26 und 27 (Fig. 2, 3). Im gezeigten Beispiel sind die Druckflächen 21 und 23 der Kettengliedscheiben 1 und 4 zur Vorderfläche 13 und zur Rückenfläche 12 geneigt und haben die gleiche Neigung wie die konischen Flächen 28 und 29 der Treibscheiben 26 und 27.

Nur der Deutlichkeit wegen ist in den Figuren 1, 2 und 3 zwischen den einzelnen benachbarten Kettengliedscheiben ein Zwischenraum dargestellt. In der Praxis liegen die benachbarten Kettengliedscheiben eines jeweiligen Kettengliedes 5, 6 oder 7 aneinander an, d. h. die Kettengliedscheiben von jedem Kettenglied werden durch die als Treibscheiben wirkenden Kegelscheiben 26 und 27 zu einem Block zusammengedrückt.

Aus Fig. 1 ist ersichtlich, dass das Kettenglied 5 jeweils vier Scheibenlaschen 10 aufweist, die auf einem Gelenkbolzen 8 sitzen. Das gleiche gilt auch für das Kettenglied 7. Das dazwischen liegende Kettenglied 6 weist jeweils nur drei Scheibenlaschen 10 auf, die auf einem Gelenkbolzen 8 sitzen. Die Erstreckung der Vorsprünge 14, 15, 16, 19 und 20 ist so bemessen, dass sie grösser ist als die Dicke der Scheibenlaschen 10, so dass also benachbarte Kettenglieder im Bereich ihrer Scheibenlaschen 10 nicht aneinander angedrückt werden, so dass die benachbarten Kettenglieder Schwenkbewegungen um den zwischenliegenden Gelenkbolzen 8 erlauben. Die Kettengliedscheiben von jedem Kettenglied werden also nur im Bereich ihrer Vorsprünge 14, 15, 16, 19 und 20 und ihrer Druckfläche 21-25 aneinander gepresst.

Aus Fig. 1 ist ersichtlich, dass auf jedem Gelenkbolzen 8 (die in den Achsen 11 liegen) erste und zweite Kettengliedscheiben sitzen. Das Kettenglied 5 hat erste Kettengliedscheiben 1 und 3 sowie eine der zweiten Kettengliedscheiben 2. Das Kettenglied 6 hat zwei erste Kettengliedscheiben 4 und eine der zweiten Kettengliedscheiben 2. Das Kettenglied 7 ist wie das Kettenglied 5 ausgebildet, aber in einer anderen Zuordnung der Kettengliedscheiben 2 und 3. Aus Fig. 1 ist ersichtlich, dass in der Draufsicht auf die Gliederkette die Kettengliedscheiben 2 von benachbarten Kettengliedern zueinander versetzt liegen. Die Kettengliedscheiben 3 der beiden Kettenglieder 5 und 7 sind ebenfalls in dieser Draufsicht seitlich versetzt.

Bei einer Ausführung der Gliederkette, die etwa der dargestellten Form in Fig. 1 entspricht, ist die Erstreckung des Vorsprungs 15 der Kettengliedscheibe 3 nur wenig grösser als die Dicke der Scheibenlasche 10. Der Vorsprung 14 der Kettengliedscheibe 1 hat die doppelte Erstreckung vom Vorsprung 15, überragt also um das doppelte Mass die Vorderfläche 13. Der Vorsprung 16 der Kettengliedscheibe 4 hat die dreifache Erstreckung des Vorsprungs 15, überragt also um das dreifache Mass seine Vorderfläche 13. Da die Scheibenlaschen 10 von allen Kettengliedscheiben die gleiche Dicke haben, ergibt sich somit, dass die Gesamtdicke der Kettengliedscheibe 1 in der Darstellung nach Fig. 1 um 50 % grösser ist als die Gesamtdicke der Kettengliedscheibe 3. Die Kettengliedscheibe 4 ist in ihrer Gesamtdicke und in der Darstellung nach Fig. 1 wieder um 50 % grösser als die Gesamtdicke der Kettengliedscheibe 1.

Aus Fig. 1 und 4 ist ersichtlich, dass bei allen auf zwei benachbarten Gelenkbolzen 8 (die in den Achsen 11 liegen) sitzenden Kettengliedscheiben 1 bis 4 die an diesen vorhandenen Vorsprünge 14, 15, 16, 19 und 20 in Querrichtung der Gliederkette deckungsgleich hintereinander liegen.

In Fig. 5 ist eine zweite Ausführungsform der Gliederkette gezeigt, wobei zwei unterschiedliche Kettenglieder 30 und 31 dargestellt sind. Das Kettenglied 30 hat hierbei eine Kettengliedscheibe 32, deren Druckfläche 33 eine etwas andere Form als die der Druckflächen 21 und 23 nach Fig. 4 hat. In diesem Zusammenhang soll noch darauf hingewiesen werden, dass beim ersten Beispiel nach den Fig. 1-4 auch die Druckflächen 22, 24 und 25 die gleiche Form wie die in Fig. 4 gezeigten Druckflächen 21 und 23 haben. In Fig. 5 hat die Kettengliedscheibe 34 des Kettenglieds 31 eine Druckfläche 35, die wesentlich von der Form der Druckfläche 33 abweicht. Es ist also auch möglich eine Gliederkette zu bilden, bei der benachbarte Kettenglieder Druckflächen von unterschiedlicher Form aufweisen. Aus verschiedenen Gründen ist es aber zweckmässig alle Kettengliedscheiben eines Kettengliedes mit der gleichen Druckflächenform zu versehen. Die in Fig. 5 gezeigten benachbarten Kettenglieder 30 und 31 haben aber noch die Besonderheit, dass ihre Kettengliedscheiben 32 und 34 an ihren oberen Kanten 42 und 36 nur geringen Abstand voneinander haben. Hierdurch wird ein Krümmen der Gliederkette nur in einer Richtung erlaubt, so dass sich in manchen Verwendungsfällen bessere Laufeigenschaften der Gliederkette ergeben.

In Fig. 6 ist bei einer dritten Ausführungsform der Gliederkette lediglich eine Kettengliedscheibe 37 eines Kettengliedes 38 gezeigt, wobei Wert auf eine möglichst kleine Teilung 39 gelegt wird. Der Abstand benachbarter Gelenkbolzen 40 ist hierbei also möglichst klein gehalten. Die Form der Druckfläche 41 unterscheidet sich ebenfalls von den anderen dargestellten Druckflächen 21-25, 33 und 35.

Bei der erläuterten, erfindungsgemässen Gliederkette liegen also die Kettenglieder selbst unmittelbar an den Kegelscheiben (Treibscheiben) des stufenlos regelbaren Umschlingungsgetriebes an und nicht mehr über gesonderte Druckstücke oder über die Gelenkbolzen. Die auf benachbarten Gelenkbolzen 8 sitzenden Kettengliedscheiben eines Kettengliedes sind mit Druckflächen versehen, die verhältnismässig gross gestaltet werden können, so dass die spezifische Flächenpressung relativ gering gehalten werden kann. Die Kettengliedscheiben eines Kettengliedes liegen nur über ihre Druckflächen aneinander an, wobei die Scheibenlaschen hiervon unbelastet sind, so dass die Gliederkette leichtgängig ist. Zur Verhinderung von Schwingungen kann die Aggregation der Kettengliedscheiben eines Kettengliedes entlang des Gliederkettenverlaufes verschieden geändert werden. Die Kettengliedscheiben eines Kettengliedes können auch aus unterschiedlichen Materialien sein, d. h. die aneinander liegenden Kettengliedscheiben eines Kettengliedes können in einer gewünschten Materialpaarung vorliegen. Laufen die Kettengliedscheiben eines Kettengliedes zwischen den Kegelscheiben 26 und 27, so werden die Kettengliedscheiben von jedem Kettenglied 5, 6 oder 7 mittels ihren Druckflächen 22, 24, 25 sowie Rückenflächen 12 reibschlüssig miteinander verblockt, so dass dann das ganze als Block vorliegende Kettenglied mit seinen Druckflächen 21 oder 23 reibschlüssig an den Flächen 28 und 29 der Kegelscheiben 26 und 27 anliegt.

Die erfindungsgemässe Gliederkette kann z. B. für ein automatisches Getriebe bei Automobilen verwendet werden. Die Laufruhe der Gliederkette bei einem solchen Getriebe ist bisher ein grosses Problem. Bisher entstehen hierbei Geräusche, die sich durch einen gleichbleibenden Bewegungsablauf einer in sich gleichbleibenden Gliederkette entstehen. Durch diese gleichbleibenden Bewegungsabläufe von bekannten Gliederketten entstehen Schwingungen, die sich dann als unangenehme Geräusche demerkbar machen. Durch unsymmetrische Anordnungen der Kettengliedscheiben (siehe Kettenglieder 5 und 7 in Fig. 1) bei der erfindungsgemässen Gliederkette kann dem Eigenschwingungsverhalten der einzelnen Kettengliedscheiben entgegengewirkt werden. Hierdurch kann auch das seitliche Versetzen von untereinander gleichen Kettengliedscheiben beitragen, wie es in Fig. 1 anhand der Kettengliedscheiben 2 und 3 gezeigt ist. Die erwähnte verschiedene Materialwahl für die Kettengliedscheiben kann hinsichtlich der erreichbaren Laufruhe noch beitragen. Man kann also durch empirisches Zusammensetzen der verschiedenen Kettengliedscheiben zu einem Kettenglied und Anordnung von entsprechend aufgebauten benachbarten

Kettengliedern eine Gliederkette schaffen, die den jeweiligen Betriebsbedingungen bestmöglichst angepasst ist, um möglichst ruhig zu laufen. Als Betriebsbedingungen sollen hier beispielsweise genannt werden : die Laufgeschwindigkeit der Gliederkette, die übertragbare Leistung, der Abstand der beiden Treibscheibenpaare innerhalb denen die Gliederkette läuft, übertragbares Drehmoment, Eigenfrequenz der Bauteile des automatischen Getriebes, Motorcharakteristik usw.

Selbstverständlich können auch Kettenglieder unterschiedlicher Teilung in gewünschter Aneinanderreihung verwendet werden. Das ist also eine weitere Freiheit in der empirischen Zusammensetzung der Kettenglieder zur Gliederkette.

Bei einer nicht dargestellten Variante der Gliederkette kann auf erste Kettengliedscheiben nach dem Patentanspruch 2 verzichtet werden, so dass dann nur zweite Kettengliedscheiben nach dem Anspruch 4 vorhanden sind. Hierbei werden die Kettengliedscheiben 1 und 4 so abgeändert, dass sie an ihrer Rückenfläche 12 einen ambossartigen Vorsprung aufweisen, der die halbe Höhe der in Fig. 1 gezeigten Vorsprünge 15, 19 und 20 hat. Die Kettengliedscheiben 2 werden dann so abgeändert, dass ihre Vorsprünge 19 und 20 nur noch die halbe Höhe haben. Auf die Kettengliedscheiben 3 kann dann ganz verzichtet werden.

## Patentansprüche

1. Gliederkette für ein stufenlos verstellbares Kegelscheiben-Umschlingungsgetriebe, bei der jedes Kettenglied (5,6,7) aus mehreren Kettengliedscheiben (1,2,3,4) besteht, die mittels Gelenkbolzen (8) miteinander verbunden und aneinander anliegend zu einem einzigen Kettenglied miteinander verblockt sind, wobei auch benachbarte Kettenglieder mittels dieser Gelenkbolzen miteinander verbunden sind, und mit zwischen benachbarten Gelenkbolzen (8) liegenden Druckflächen (21,23) der Kettenglieder, welche Druckflächen dazu bestimmt sind zur Uebertragung der Reibkräfte an konischen Flächen (28,29) der Treibscheiben (26,27) des Kegelscheiben-Umschlingungsgetriebes anzuliegen, dadurch gekennzeichnet, dass jede Kettengliedscheibe (1,2,3 bzw. 2,4) zwischen ihren zum Aufnehmen der Gelenkbolzen (8) dienenden Durchbrechungen (9), die in Scheibenlaschen (10) angebracht sind, welche in der Scheibenebene (12, 13 bzw. 17, 18) liegen zumindest einen aus der Scheibenebene ragenden ambossartigen Vorsprung (14,15,16,19,20) aufweist, der eine der Druckflächen (21-25) trägt.

2. Gliederkette nach Anspruch 1, gekennzeichnet durch erste Kettengliedscheiben (1,3,4), von denen jede eine ebene Rückenfläche (12) aufweist, die sich über die gesamte Kettengliedscheibe (1,3,4) erstreckt, und weiterhin eine ebene Vorderfläche (13) aufweist, die sich nur über den Bereich der Scheibenlaschen (10) erstreckt.

3. Gliederkette nach Anspruch 1, dadurch gekennzeichnet, dass die mit den Treibscheiben (26,27) zusammenarbeitenden Kettengliedscheiben (1,4) geneigte Druckflächen (21,23) am ambossartigen Vorsprung (14,16) aufweisen.

4. Gliederkette nach Anspruch 1, gekennzeichnet durch zweite Kettengliedscheiben (2), von denen jede zwei zueinander parallele Laschenflächen (17,18) aufweist, und jede Laschenfläche (17 bzw. 18) von einem ambossartigen Vorsprung (19 bzw. 20) überragt ist, wobei die beiden Druckflächen (24,25) der beiden Vorsprünge (19,20) parallel zueinander sind.

5. Gliederkette nach Anspruch 2, dadurch gekennzeichnet, dass die Erstreckung des Vorsprungs (14,16) bei einigen (1,4) der ersten Kettengliedscheiben (1,3,4) grösser ist als bei den anderen (3) der ersten Kettengliedscheiben (1,3,4).

6. Gliederkette nach Anspruch 2 und 4, dadurch gekennzeichnet, dass auf jedem Gelenkbolzen (8) erste und zweite Kettengliedscheiben (1,2,3 bzw. 2,4) sitzen.

7. Gliederkette nach Anspruch 5, dadurch gekennzeichnet, dass bei einigen (1 bzw. 4) der ersten Kettengliedscheiben (1,3,4) ihre Erstreckung, gemessen zwischen Rückenfläche (12) und Druckfläche (21 bzw. 23), um 50% grösser ist als bei anderen (3 bzw. 1) der ersten Kettengliedscheiben (1,3,4).

8. Gliederkette nach Anspruch 1, dadurch gekennzeichnet, dass die Erstreckung des Vorsprungs (14, 15, 16, 19, 20) grösser ist als die Dicke einer Scheibenlasche (10).

9. Gliederkette nach Anspruch 1, dadurch gekennzeichnet, dass bei allen auf zwei benachbarten Gelenkbolzen (8) sitzenden Kettengliedscheiben (1-4) die an diesen vorhandenen Vorsprünge (14, 15, 16, 19, 20) in Querrichtung der Kette deckungsgleich hintereinanderliegen.

10. Gliederkette nach Anspruch 2, gekennzeichnet durch erste Kettengliedscheiben (3), bei denen die Rückenfläche (12) und die am Vorsprung (15) vorhandene Druckfläche (22) parallel zueinander sind.

**Claims**

1. Link belt for an infinitely variable transmission including cone disks looped by a flexible belt, in which every link member (5, 6, 7) consists of a plurality of link member disks (1, 2, 3, 4) which are interconnected by pivot pins (8) and are interlocked abutting each other to a single chain link, whereby also adjacent chain links are interconnected by means of these pivot pins, and including thrust surfaces (21, 23) of the chain links located between adjacent pivot pins (8), which thrust forces are intended to abut conical surfaces (28, 29) of the driving disks (26, 27) of the link belt for an infinitely variable transmission for the transmission of the friction forces, characterized in that every chain link disk (1, 2, 3 ; 2, 4, respectively) comprises between its through bores (9) for the receipt of the pivot pins (8) located in disk tongues (10) which are located in the plane (12, 13 ; 17, 18, respectively) of the disks at least one anvil shaped projection (14, 15, 16, 19, 20) projecting out of the plane of the disks and which carries one of the thrust surfaces (21-25).

2. Link belt according to claim 1, characterized by first belt link disks (1, 3, 4), of which each comprises a planar back surface (12) which extends over the entire belt link disk (1, 3, 4) and comprises further a planar front surface (13) which extends only across the area of the disk tongues (10).

3. Link belt according to claim 1, characterized in that the chain link disks (1, 4) cooperating with the driving disks (26, 27) comprise inclined thrust surfaces (21, 23) at the anvil-shaped projection (14, 16).

4. Link belt according to claim 1, characterized by second belt link disks (2), of which every one comprises two tongue surfaces (17, 18) extending parallel to each other, and that an anvil shaped projection (19 ; 20, respectively) projects over each tongue surface (17 ; 18, respectively), whereby the two thrust surfaces (24, 25) of the two projections (19, 20) are parallel to each other.

5. Link belt according to claim 2, characterized in that the extent of the projection (14, 16) at some (1, 4) of the first chain link disks (1, 3, 4) is larger than at the other (3) of the first chain link disks (1, 3, 4).

6. Link belt according to claim 2 and 4, characterized in that first and second chain link disks (1, 2, 3 ; 2,4, respectively) are seated on each pivot pin (8).

7. Link belt according to claim 5, characterized in that at some (1 ; 4, respectively) of the first chain link disks (1, 3, 4) their extent, measured between back surface (12) and thrust surface (21, 23, respectively) is by 50 % larger than at other (13 ; 1, respectively) of the first chain link disks (1, 3, 4).

8. Link belt according to claim 1, characterized in that the extent of the projection (14, 15, 16, 19, 20) is larger than the thickness of one disk tongue (10).

9. Link belt according to claim 1, characterized in that at all belt link disks (1-4) seated on two adjacent pivot pins (8) the projections (14, 15, 16, 19, 20) present thereon are located in registry in lateral direction of the belt.

10. Link belt according to claim 2, characterized by first belt link disks (3), at which the back surfaces (12) and the thrust surface (22) located at the projection (15) are parallel to each other.

**Revendications**

1. Chaîne pour variateur de vitesse continu à poulies coniques, dans laquelle chaque maillon (5,6,7) comprend plusieurs plaques de maillons (1,2,3,4) qui sont reliées entre elles au moyen de boulons d'articulation (8), qui sont bloquées en étant appliquées les unes contre les autres pour former un maillon de chaîne unique, des maillons voisins étant également reliés l'un à l'autre au moyen de ces boulons d'articulation, et avec des surfaces de pression (21,23) des maillons se trouvant entre des boulons d'articulation voisins (8) du maillon, lesquelles surfaces sont destinées à la transmission des forces de frottement à des surfaces coniques (28,29) des poulies motrices (26,27) de la transmission à poulies coniques, caractérisée en ce que chaque plaque de maillon (1,2,3, respectivement 2,4), entre ses percées (9) servant à recevoir les boulons d'articulation (8), qui sont pratiquées dans des brides (10) des plaques, qui se trouvent dans le plan des plaques (12,13, respectivement 17,18), présente au moins une saillie (14,15,16,19,20) du genre d'une enclume dépassant par rapport au plan de la plaque qui porte l'une des surfaces de pression (21-25).

2. Chaîne suivant la revendication 1, caractérisée par de premières plaques de maillons (1,3,4) dont chacune présente une surface dorsale plane (12) qui s'étend sur toute la plaque de maillon (1,3,4), et présente au surplus une surface antérieure plane (13) qui ne s'étend que sur la région des brides (10) des plaques.

3. Chaîne suivant la revendication 1, caractérisée en ce que les plaques de maillons (1,4) qui coopèrent avec les poulies motrices (26,27) présentent des surfaces de pression (21,23) inclinées sur la saillie (14,16) du genre d'une enclume.

4. Chaîne suivant la revendication 1, caractérisée par de deuxièmes plaques de maillons (2) dont chacune présente deux surfaces de brides (17,18) parallèles l'une à l'autre, et en ce que chaque surface de bride (17 respectivement 18) est dépassée par une saillie (19 respectivement 20) du genre d'une enclume, les deux surfaces de pression (24,25) des deux saillies (19,20) étant parallèles l'une à l'autre.

5. Chaîne suivant la revendication 2, caractérisée en ce que l'étendue de la saillie (14,16) dans certaines (1,4) des premières plaques de maillons (1,3,4) est plus grande que dans les autres (3) premières plaques de maillons (1,3,4).

6. Chaîne suivant les revendications 2 et 4, caractérisée en ce que, sur chaque boulon d'articulation sont portées de premières et de deuxièmes plaques de maillons (1,2,3 respectivement 2,4).

7. Chaîne suivant la revendication 5, caractérisée en ce que, dans certaines (1 respectivement 4) des premières plaques de maillons (1,3,4), leur étendue mesurée entre la surface dorsale (12) et la surface de pression (21 respectivement 23) est de 50 % plus grande que dans d'autres (3 respectivement 1) des premières plaques de maillons (1,3,4).

8. Chaîne suivant la revendication 1, caractérisée en ce que l'étendue de la saillie (14,15,16,19,20) est plus grande que l'épaisseur d'une bride (10) de plaque.

9. Chaîne suivant la revendication 1, caractérisée en ce que, dans toutes les plaques de maillons (1-4) portées par deux boulons d'articulation (8) voisins, les saillies (14,15,16,19,20) présentes sur celles-ci se trouvent les unes derrière les autres en se recouvrant dans la direction transversale de la chaîne.

10. Chaîne suivant la revendication 2, caractérisée par de premières plaques de maillons (3) dans lesquelles la surface dorsale (12) et la surface de pression (22) présente sur la saillie (15) sont parallèles l'une à l'autre.

*Fig.1*

## Fig. 2

## Fig. 3

Fig.4

Fig.5

Fig.6

3